# EUROPEAN PATENT SPECIFICATION

(11) **EP 2 506 626 B1**
(45) Date of publication and mention of the grant of the patent: **29.06.2016**
(21) Application number: 10791303.0
(22) Date of filing: 11.05.2010
(51) Int. Cl.: H04W 24/00

(54) **METHOD AND SYSTEM FOR MONITORING QUALITY BASED ON IP BEARER IN A MOBILE NETWORK**
VERFAHREN UND SYSTEM ZUR QUALITÄTSÜBERWACHUNG AUF DER BASIS EINES IP-TRÄGERS IN EINEM MOBILFUNKNETZ
PROCÉDÉ ET SYSTÈME DE SURVEILLANCE DE QUALITÉ SUR LA BASE D'UNE PORTEUSE IP DANS UN RÉSEAU MOBILE

(30) Priority: 31.12.2009 CN 200910217518
(43) Date of publication of application: 03.10.2012
(73) Proprietor: ZTE Corporation, Shenzhen, Guangdong 518057 (CN)
(72) Inventor: WANG, Zhen, Shenzhen, Guangdong 518057 (CN); MA, Qianli, Shenzhen, Guangdong 518057 (CN); YUAN, Leifeng, Shenzhen, Guangdong 518057 (CN)
(74) Representative: V.O.
(86) International application number: PCT/CN2010/072603
(87) International publication number: WO 2010/148797

(56) References cited:
- WO-A2-2009/034426
- CN-A- 1 859 231
- CN-A- 101 242 300
- CN-A- 101 304 371
- CN-A- 101 425 868
- US-A1- 2003 064 725
- US-A1- 2006 250 955
- US-A1- 2008 049 705
- 3GPP DRAFT; DES03058 0-0-5 MP PROFILE (RAPP-DRAFT), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. Berlin; 20051105, 5 November 2005 (2005-11-05), XP050035290, [retrieved on 2005-11-05]

## Description

### TECHNICAL FIELD

The invention relates to a quality monitoring technology of an Internet Protocol (IP) bearer, and in particular to a method and a system for monitoring quality based on the IP bearer in a mobile network.

### BACKGROUND

In a Legacy MS domain (LMSD) phase of a Code Division Multiple Access (CDMA) 2000 network, a core network first introduces a soft switching idea and a principle based on a call control and a bearer separation; in a bearer network, a packet network technology can be adopted to replace a Time Division Multiplexing (TDM) technology.

It is noted that patent publication US 2006/250955 A1 relates to monitoring a quality of a connection between a terminal and a gateway. In US '955, a method is provided for indicating changes in quality of service between a terminal and a gateway to a server, comprising the steps of monitoring a quality of a connection between a terminal and a gateway in the gateway, and informing a core network element handling signaling relating to the connection about the quality of the connection by the gateway.

For a network operator, how to conveniently and quickly monitor the quality of the IP bearer of an entire network is very important; at present, there are many methods for detecting an IP link, which specifically includes:
a Bidirectional Forwarding Detection (BFD) technology: the BFD is a standard draft of an Internet Engineering Task Force (IETF) and provides a simple and abstract method to detect network link capability and a system communication forwarding function, and thus defines a simple and specific method for detecting traffic forwarding capability of a link or system; moreover, the BFD can detect a fault in a forwarding path within a very short time and trigger a handover to a spare route, an interface, or even an entire network; and
an IP path detection: the IP path detection is a method to detect a state of a transmission path between a source IP and a target IP; through the IP path state detection, an IP address list of all intermediate nodes through which a message passes from the source IP to the target IP and the node on which a transmission fault occurs can be acquired.

The above technologies have the following defects that:
1. only a local detection can be performed: for an interoffice IP bear being indirectly connected to one node, the bearer quality of the IP bear can not be obtained;
2. a detection of the IP bearer can only be realized under the cooperation of an other network element: the detection is realized in the case of needing the cooperation between adjacent office directions; when devices of different factories are located at the adjacent office direction, there might have a problem of difficult abutting joint and the bearer quality can not be obtained; and
3. monitoring points are scattered and can not be centered to a place, which is not good for overall network monitoring.

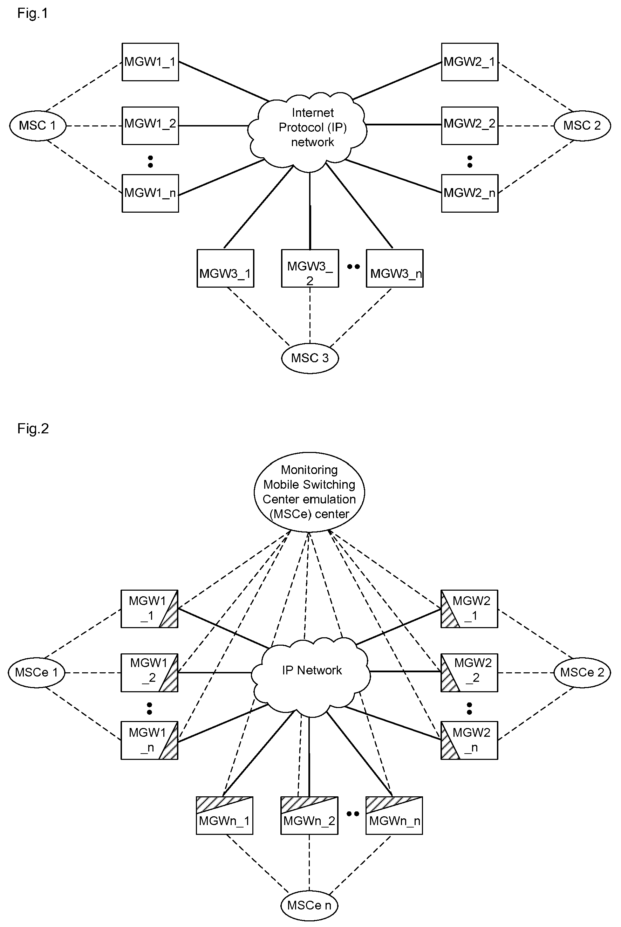

Fig. 1 shows a structure diagram of a system for monitoring an IP bearer in an existing mobile network; as shown in Fig. 1, there are three Mobile Switching Centers (MSCs) in the mobile network, wherein each MSC controls a plurality of Media Gateways (MGWs) and the MSCs are interconnected through an IP network. On an MSC3, the IP bearer between the MSC3 and an MSC1 and the IP bearer between the MSC3 and an MSC2 can be monitored, but the IP bearer between the MSC1 and the MSC2 can not be monitored. In the mobile network shown in Fig. 1, when each MSC has a different understanding on test technology or has a different implementation way, all interoffice IP bearers can not be monitored.

It can be seen from the above technical defects that, the existing network detection technologies can not perform a centralized and real-time detection on the quality of bearers between nodes inside an entire network topology from the view of the entire network.

### SUMMARY

In view of the above problem, the main purpose of the invention is to provide a method and a system for monitoring quality based on an Internet Protocol (IP) bearer in a mobile network, which can realize quality monitoring of the IP bearer in the entire mobile network.

In order to achieve the purpose above, the technical solution of the invention is realized as follows.

The invention proposes a method for monitoring quality based on an IP bearer in a mobile network, which includes: setting an IP bearer monitoring center; and setting logical data configurations of virtual gateways in Media Gateways (MGWs) of a mobile network, and connecting the virtual gateways in all the MGWs to the IP bearer monitoring center; the method further includes that:
the IP bearer monitoring center sends a test call request to the virtual gateways in MGWs to be monitored, wherein the test call request includes information of the MGWs to be monitored;
the virtual gateways allocate test terminals according to the test call request; the IP bearer monitoring center initiates a call flow between the test terminals; and
the virtual gateways obtain a Quality of Service (QoS) parameter of a bearer during the call flow between the test terminals; and the virtual gateways send the QoS parameter to the IP bearer monitoring center through an audit process.

Preferably, the QoS parameter may include at least one of the following parameters: packet loss ratio, time delay and jitter.

Preferably, the connecting the virtual gateways in all the MGWs to the IP bearer monitoring center may include that:
the virtual gateways in all the MGWs are connected to the IP bearer monitoring center based on an IP network.

Preferably, the setting an IP bearer monitoring center may include:
adding a new Mobile Swithing Center (MSC) to the mobile network as the IP bearer monitoring center;
or, taking a configured MSC in the mobile network as the IP bearer monitoring center;
or, setting in the mobile network a computer which runs operating data of an analog MSC, and taking the computer as the IP bearer monitoring center.

Preferably, the MGWs to be monitored may be at least two MGWs; wherein
the virtual gateways in the at least two MGWs may allocate one test terminal respectively according to the test call request.

The invention proposes a system for monitoring quality based on an IP bearer in a mobile network, which includes: a setting unit, a first sending unit, an allocation unit, an initiation unit, an obtaining unit and a second sending unit, wherein
the setting unit is configured to set an IP bearer monitoring center and set logical data configurations of virtual gateways in Media Gate Ways (MGWs) of a mobile network, wherein the virtual gateways in all the MGWs are connected to the IP bearer monitoring center;
the first sending unit is configured to send a test call request to the virtual gateways in MGWs to be monitored;
the allocation unit is configured to allocate test terminals according to the test call request;
the initiation unit is configured to initiate a call flow between the test terminals;
the obtaining unit is configured to obtain a QoS parameter of a bearer during the call flow between the test terminals; and
the second sending unit is configured to send the QoS parameter obtained by the obtaining unit to the IP bearer monitoring center through an audit process.

Preferably, the QoS parameter may include at least one of the following parameters: packet loss ratio, time delay and jitter.

Preferably, that the virtual gateways in all the MGWs are connected to the IP bearer monitoring center may include that:
the virtual gateways in all the MGWs are connected to the IP bearer monitoring center based on an IP network.

Preferably, the setting unit setting the IP bearer monitoring center may be configured to:
add a new MSC to the mobile network as the IP bearer monitoring center;
or, take a configured MSC in the mobile network as the IP bearer monitoring center;
or, set in the mobile network a computer which runs operating data of an analog MSC, and take the computer as the IP bearer monitoring center.

Preferably, the MGW to be monitored may be at least two MGWs; wherein
the allocation unit may be configured to allocate one test terminal respectively in the virtual gateways in the at least two MGWs according to the test call request.

In the invention, by setting a dedicated IP bearer monitoring center and setting virtual gateways in all MGWs of the mobile network, the MGWs are connected to the IP bearer monitoring center through their respective virtual gateways. When the IP bearer monitoring center performs a call test, the MGW allocates a corresponding test terminal according to the call test request and initiates a flow of the call test. The MGW monitors IP bearer quality data in a call and sends the data to the IP bearer monitoring center through the virtual gateways. The invention can realize to perform a call monitoring on any MGW of the mobile network, so that the IP bearer quality of the entire network can be obtained. The technical solution is simple to implement and is practical.

### BRIEF DESCRIPTION OF THE DRAWINGS

Fig. 1 shows a structure diagram of a system for monitoring an IP bearer in an existing mobile network;
Fig. 2 shows a structure diagram of a system for monitoring an IP bearer in a mobile network according to the invention;
Fig. 3 shows a flowchart of a method for monitoring quality based on an IP bearer in a mobile network according to the invention; and
Fig. 4 shows a structure diagram of a system for monitoring quality based on an IP bearer in a mobile network according to the invention.

### DETAILED DESCRIPTION

The basic idea of the invention is: by setting a dedicated IP bearer monitoring center and setting virtual gateways in all MGWs of a mobile network, the MGWs are connected to the IP bearer monitoring center through their respective virtual gateways. When the IP bearer monitoring center performs a call test, the MGWs allocate a corresponding test terminal according to the call test request and initiates a flow of the call test. The MGWs monitor IP bearer quality data in a call and send the data to the IP bearer monitoring center through the virtual gateway, so as to obtain the IP bearer quality of the entire network.

Fig. 2 shows a structure diagram of a system for monitoring an IP bearer in a mobile network according to the invention; as shown in Fig. 2, in order to realize centralized monitoring, first, all MGWs of the entire network need to be connected to a Mobile Switching Center emulation (MSCe) or an analogue MSCe serving as an IP bearer monitoring center; in this way, all bearers of the existing network are simulated into the bearers between internal gateways managed by the monitoring center; then, test call data between each two gateways is configured on the IP bearer monitoring center, and the bearer quality between the each two gateways is obtained through an automatically initiated test call, here, the each two gateways can be any two gateways in the entire network. The process of setting an IP bearer monitoring center (Test MSCe Center) in the entire mobile network can specifically include adding a new MSCe to an existing network to serve as the IP bearer monitoring center, also can include selecting an MSCe running in the existing network to serve as the IP bearer monitoring center, and further can include taking an analog MSCe running on a personal computer as the IP bearer monitoring center. Through this processing, one MSCe or one analog MSCe can be transformed into the IP bearer monitoring center, and the IP bearer quality of the entire network can be obtained in real time through a test call function, needing no participation of other MSCe.

As shown in Fig. 2, a logic data configuration of a virtual gateway is added on all MGWs entities of the entire network and the virtual gateway is connected to the IP bearer monitoring center. The oblique line part in the MGW in Fig. 2 is namely the virtual gateways. In this invention, the MGWs of the entire mobile network need to support a virtual gateway technology and support a related function of a test terminal, that is, the MGWs need to establish an analog terminal and send analog voice data packets continuously on an established speech path bearer. In this invention, the virtual gateway refers to namely a single board with IP communication and processing resource thereof, and the functions of the virtual gateway are realized through an IP communication port set on the single board and an IP address thereof, an IP protocol installed on the single board used for resolving IP data and encapsulating the IP data, a gateway application program, and the like. The IP bearer monitoring center in this invention is correspondingly provided with a corresponding IP address and an address forwarding table for communicating with the virtual gateways of all the MGWs. The test terminal in this invention is a virtual terminal, and can be an IP communication port on a single board in the virtual gateway; through this communication port, transmission and reception of a voice data packet can be performed with a test terminal in another MGW to be monitored. Those skilled in the art should understand that it is easy to implement the above virtual gateways and test terminals.

The IP bearer monitoring center shown in Fig. 2 further needs to configure corresponding test call configuration data for a bearer between two MGWs to be monitored. The IP bearer monitoring center initiates a flow of a test call between two interoffice gateways; when a test call is performed every time, a QoS parameter of a current bearer is obtained through an audit process, wherein the QoS parameters include but are not limited to: packet loss ratio, time delay and jitter. Through a certain number of the test calls, the IP bearer monitor center can determine an average value according to the IP bearer quality of the several times of the test calls and use the average value as the currently reported bearer quality. The implementation mode of the test call in this invention is the same as that of the test call in the prior art.

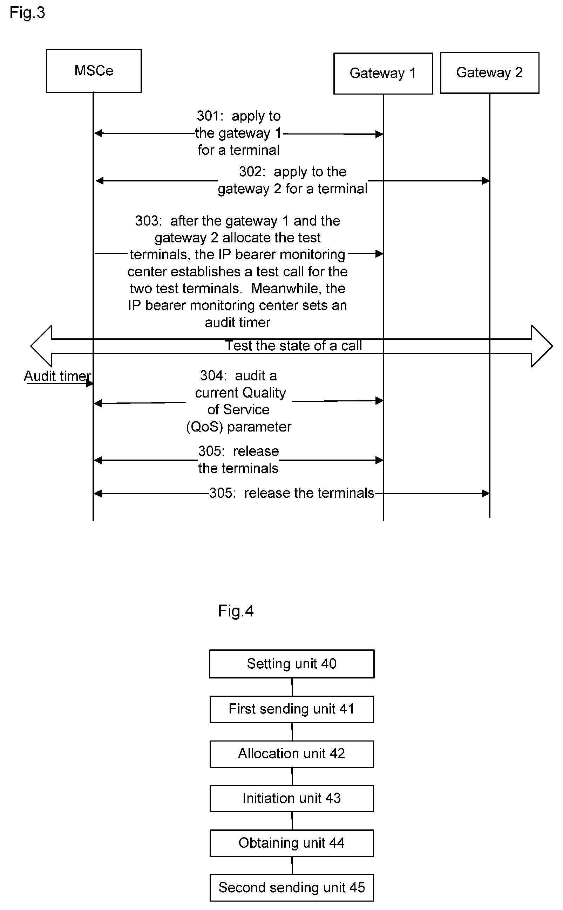

Fig. 3 shows a flowchart of a method for monitoring quality based on an IP bearer in a mobile network according to the invention; as shown in Fig. 3, the method for monitoring the quality based on the IP bearer in the mobile network according to the invention includes the following steps.

Step 301: an MSCe serving as an IP bearer monitoring center applies to a gateway 1 (MGW) for a test terminal.

The IP bearer monitoring center determines two MGWs to be monitored according to configuration data of a user, communicates with the virtual gateways of the two determined MGWs through virtual gateways configured by the IP bearer monitoring center *per se*, and initiates a call test request to the virtual gateways of the MGWs to be monitored, wherein the call test request carries identifier information of the two determined MGWs.

Here, the gateway 1 is applied for a test terminal at first, and then the test terminal applied for the gateway 1 is used as a calling party.

Step 302: the IP bearer monitoring center applies to a gateway 2 for a test terminal.

Step 303: after the gateway 1 and the gateway 2 allocate the test terminals, the IP bearer monitoring center establishes a test call for the two test terminals. Meanwhile, the IP bearer monitoring center sets an audit timer.

Step 304: the audit timer times out and the IP bearer monitoring center sends the gateway 1 an audit message to obtain the QoS parameter of this test call.

Specifically, the IP bearer monitoring center takes the gateway 1 as an object obtaining the QoS parameter of the test call, that is, the QoS parameter of this test call is monitored by the gateway 1. After receiving the audit message sent by the IP bearer monitoring center, the gateway 1 sends the QoS parameter monitored this time to the IP bearer monitoring center. When the IP bearer monitoring center obtains the QoS parameter of a certain IP bearer for several times, the IP bearer monitoring center takes the average value of the QoS parameters obtained for several times as an output parameter value. In this invention, the QoS parameter of the IP bearer can further be reported by the gateway 2; at the moment, the IP bearer monitoring center sends an audit message to the gateway 2. Moreover, the QoS parameters of the IP bearer monitored by the gateway 1 and the gateway 2 respectively can be reported to the IP bearer monitoring center, and then the IP bearer monitoring center takes the average value of all obtained QoS parameters as the output parameter value.

Step 305: after finishing auditing, the IP bearer monitoring center releases the test call and initiates a next test call.

In this invention, since communication is performed based on an IP between the test terminals, the IP bearer monitoring center can simultaneously monitor the QoS parameters of the IP bearer for more than three MGWs; specifically, only if more than two MGWs set the test terminal respectively and each test terminal implements the corresponding transmission and reception of an analog voice data packet. The specific implementation is substantially the same as the flow shown in Fig. 3, and no further description of implementation details is needed here.

The technical solution of the invention is applicable to such a mobile communication network as CDMA200, Universal Mobile Telecommunications System (UMTS), Time Division-Synchronous Code Division Multiple Access (TD-SDCMA) and the like.

The technical solution of the invention can realize the quality monitoring of the IP bearer of the entire network on one MSCe or virtual MSCe node, has a few change on a transmission network of an existing network and has very low requirment on capability on each network element in the existing network; only adding a virtual gateway configuration on all gateways and making the all gateways support the test terminal technology are requried to realize a configuration of corresponding virtual gateway data on the IP bearer monitoring center and a configuration of test call data between interoffice gateways. The invention performs centralized monitoring on the IP bearer of the entire network more accurately and conveniently.

Fig. 4 shows a structure diagram of a system for monitoring quality based on an IP bearer in a mobile network according to the invention; as shown in Fig. 4, the system for monitoring the quality based on the IP bearer in the mobile network according to the invention includes a setting unit 40, a first sending unit 41, an allocation unit 42, an initiation unit 43, an obtaining unit 44 and a second sending unit 45, wherein,
the setting unit 40 is configured to set an IP bearer monitoring center and set logical data configurations of virtual gateways in MGWs of a mobile network, wherein the virtual gateways in all the MGWs are connected to the IP bearer monitoring center; wherein that the virtual gateway in each MGW is connected to the IP bearer monitoring center includes that: the virtual gateways in all the MGWs are connected to the IP bearer monitoring center based on an IP network.

That the setting unit 40 setting the IP bearer monitoring center includes: adding a new MSC to the mobile network as the IP bearer monitoring center; or, taking a configured MSC in the mobile network as the IP bearer monitoring center; or, setting in the mobile network a computer which runs operating data of an analog MSC, and taking the computer as the IP bearer monitoring center.

The first sending unit 41 is configured to send a test call request to the virtual gateways in MGWs to be monitored; and
the allocation unit 42 is configured to allocate test terminals according to the test call request; the above MGWs to be monitored are at least two MGWs, and the allocation unit 42 is configured to allocate test terminals respectively in the virtual gateways in the at least two MGWs according to the test call request.

The initiation unit 43 is configured to initiate a call flow between the test terminals; the obtaining unit 44 is configured to obtain a QoS parameter of a bearer during the call flow between the test terminals; and
the second sending unit 45 is configured to send the QoS parameter obtained by the obtaining unit to the IP bearer monitoring center through an audit process. Here, the audit process is namely the process that the IP bearer monitoring center sends an audit message to corresponding MGWs and the MGWs send the QoS parameter of the IP bearer to the IP bearer monitoring center. Since the process has the same processing mode as the existing audit process, no further description of implementation details is needed here.

The QoS parameter includes at least one of the following parameters: packet loss ratio, time delay and jitter.

Those skilled in the art should understand that, the system for monitoring the quality based on the IP bearer in the mobile network in this invention is designed for implementing the foregoing method for monitoring the quality based on the IP bearer in the mobile network; the implementation function of each processing unit included in the system shown Fig. 4 can be understood by reference to the related description of the foregoing method for monitoring the quality based on the IP bearer in the mobile network. The function of each processing unit can be implemented by a program running on a processor, or can further be implemented by a corresponding logic circuit.

The above is only the preferred embodiments of the invention, and are not intended to limit the scope of protection of the invention.

## Claims

1. A method for monitoring quality based on an Internet Protocol IP bearer in a mobile network, **characterized in that** the method comprises: setting an IP bearer monitoring center; setting logical data configurations of virtual gateways in Media Gateways, MGWs, of a mobile network, and connecting the virtual gateways in all the MGWs to the IP bearer monitoring center; the method further comprising:
sending (301), by the IP bearer monitoring center, a test call request to the virtual gateways in MGWs to be monitored, wherein the test call request includes information of the MGWs to be monitored;
allocating (303) by the virtual gateways, test terminals according to the test call request; initiating, by the IP bearer monitoring center, a call flow between the test terminals; and
obtaining (304), by the virtual gateways, a Quality of Service QoS parameter of a bearer during the call flow between the test terminals; and sending, by the virtual gateways, the QoS parameter to the IP bearer monitoring center through an audit process.

2. The method according to claim 1, wherein the QoS parameter comprises at least one of following parameters: packet loss ratio, delay and jitter.

3. The method according to claim 1, wherein the connecting the virtual gateways in all the MGWs to the IP bearer monitoring center comprises:
connecting the virtual gateways in all the MGW to the IP bearer monitoring center based on an IP network.

4. The method according to claim 1, wherein the setting an IP bearer monitoring center comprises:
adding a new Mobile Switching Center MSC to the mobile network as the IP bearer monitoring center;
or, taking a configured MSC in the mobile network as the IP bearer monitoring center;
or, setting in the mobile network a computer which runs operating data of an analog MSC, and taking the computer as the IP bearer monitoring center.

5. The method according to any one of claims 1 to 4, wherein the MGWs to be monitored are at least two MGWs; wherein
the virtual gateways in the at least two MGWs allocate one test terminal respectively according to the test call request.

6. A system for monitoring quality based on an Internet Protocol, IP, bearer in a mobile network, comprising a setting unit (40), a first sending unit (41), an allocation unit (42), an initiation unit (43), an obtaining unit (44) and a second sending unit (45), **characterized in that**
the setting unit (40) is configured to set an IP bearer monitoring center and set logical data configurations of virtual gateways in Media Gate Ways, MGWs, of a mobile network, wherein the virtual gateways in all the MGWs are connected to the IP bearer monitoring center;
the first sending unit (41) is configured to send a test call request to the virtual gateways in MGWs to be monitored;
the allocation unit (42) is configured to allocate test terminals according to the test call request;
the initiation unit (43) is configured to initiate a call flow between the test terminals; the obtaining unit (44) is configured to obtain a Quality of Service, QoS, parameter of a bearer during the call flow between the test terminals; and
the second sending unit (45) is configured to send the QoS parameter obtained by the obtaining unit to the IP bearer monitoring center through an audit process.

7. The system according to claim 6, wherein the QoS parameter comprises at least one of following parameters: packet loss ratio, delay and jitter.

8. The system according to claim 6, wherein the virtual gateways in all the MGWs are connected to the IP bearer monitoring center based on an IP network.

9. The system according to claim 6, wherein the setting unit (40) is further configured to: add a new Mobile Switching Center MSC to the mobile network as the IP bearer monitoring center;
or, take a configured MSC in the mobile network as the IP bearer monitoring center; or, set in the mobile network a computer which runs operating data of an analog MSC, and take the computer as the IP bearer monitoring center.

10. The system according to any of claims 6 to 9, wherein the MGWs to be monitored are at least two MGWs; wherein
the allocation unit (42) is further configured to allocate one test terminal respectively in the virtual gateways in the at least two MGWs according to the test call request.

## Patentansprüche

1. Verfahren zur Qualitätsüberwachung auf der Basis eines IP-Trägers in einem Mobilfunknetz, **dadurch gekennzeichnet, dass** das Verfahren umfasst:
das Einstellen einer IP-Trägerüberwachungszentrale; das Einstellen logischer Datenkonfigurationen von virtuellen Gateways in Media Gateways, MGWs, eines Mobilfunknetzes und das Verbinden der virtuellen Gateways in allen MGWs mit der IP-Trägerüberwachungszentrale; das Verfahren ferner umfassend:
das Senden (301) einer Testanrufanfrage an die virtuellen Gateways in zu überwachenden MGWs durch die IP-Trägerüberwachungszentrale, wobei die Testanrufanfrage Informationen über die zu überwachenden MGWs enthält;
das Zuordnen (303) von Testendgeräten entsprechend der Testanrufanfrage durch die virtuellen Gateways; das Initiieren eines Anrufflusses zwischen den Testendgeräten durch die IP-Trägerüberwachungszentrale; und
das Erhalten (304) eines QoS (engl. Quality of Service)-Parameters eines Trägers während des Anrufflusses zwischen den Testendgeräten; und das Senden des QoS-Parameters an die IP-Trägerüberwachungszentrale über einen Auditprozess durch die virtuellen Gateways.

2. Verfahren nach Anspruch 1, wobei der QoS-Parameter mindestens einen der folgenden Parameter umfasst: Paketverlustrate, Verzögerung und Jitter.

3. Verfahren nach Anspruch 1, wobei das Verbinden der virtuellen Gateways in allen MGWs mit der IP-Trägerüberwachungszentrale umfasst:
das Verbinden der virtuellen Gateways in allen MGW mit der IP-Trägerüberwachungszentrale auf der Basis eine IP-Funknetzes.

4. Verfahren nach Anspruch 1, wobei die Einstellung einer IP-Trägerüberwachungszentrale umfasst:
das Hinzufügen einer neuen mobilen Umschaltzentrale (MSC, engl. Mobile Switching Center) zu dem Mobilfunknetz als IP-Trägerüberwachungszentrale;
oder das Übernehmen einer konfigurierten MSC in dem Mobilfunknetz als IP-Trägerüberwachungszentrale;
oder das Einstellen eines Computers in das Mobilfunknetz, der Betriebsdaten einer analogen MSC ausführt, und das Übernehmen des Computers als IP-Trägerüberwachungszentrale.

5. Verfahren nach einem der Ansprüche 1 bis 4, wobei die zu überwachenden MGWs mindestens zwei MGWs sind; wobei
die virtuellen Gateways in den mindestens zwei MGWs jeweils ein Testendgerät entsprechend der Testanrufanfrage zuweisen.

6. System zur Qualitätsüberwachung auf der Basis eines Internetprotokoll (IP)-trägers in einem Mobilfunknetz, umfassend eine Einstellungseinheit (40), eine erste Sendeeinheit (41), eine Zuweisungseinheit (42), eine Initiierungseinheit (43), eine Erhaltungseinheit (44) und eine zweite Sendeeinheit (45), **dadurch gekennzeichnet, dass**
die Einstellungseinheit (40) konfigurier ist, eine IP-Trägerüberwachungszentrale einzustellen und logische Datenkonfigurationen von virtuellen Gatways in Media Gate Ways, MGWs, eines Mobilfunknetzes einzustellen, wobei die virtuellen Gateways in allen MGWs mit der IP-Trägerüberwachungszentrale verbunden sind;
die erste Sendeeinheit (41) konfiguriert ist, um eine Testanrufanfrage an die virtuellen Gateways in den zu überwachenden MGWs zu senden;
die Anweisungseinheit (42) konfiguriert ist, um Testendgeräte entsprechend der Testanrufanfrage zuzuweisen;
die Initiierungseinheit (43) konfiguriert ist, um Testendgeräte entsprechend der Testanrufanfrage zu initiierten;
die Erhaltungseinheit (44) konfiguriert ist, um einen QoS-Parameter eines Trägers während des Anrufflusses zwischen den Testendgeräten zu erhalten; und
die zweite Sendeeinheit (45) konfiguriert ist, um den QoS-Parameter, erhalten von der Erhaltungseinheit, über einen Auditprozess an die IP-Trägerüberwachungszentrale zu senden.

7. System nach Anspruch 6, wobei der QoS-Parameter mindestens einen der folgenden Parameter umfasst: Paketverlustrate, Verzögerung und Jitter.

8. System nach Anspruch 6, wobei die virtuellen Gateways in allen MGWs mit der IP-Trägerüberwachungszentrale auf der Basis eines IP-Netzes verbunden sind.

9. System nach Anspruch 6, wobei die Einstellungseinheit (40) ferner konfiguriert ist, um: eine neue MSC dem Mobilfunknetz als IP-Trägerüberwachungszentrale hinzuzufügen;
oder eine konfigurierte MSC in das Mobilfunknetz als IP-Trägerüberwachungszentrale zu nehmen;
oder in dem Mobilfunknetz einen Computer einzustellen, der Betriebsdaten einer analogen MSC ausführt, und den Computer als IP-Trägerüberwachungszentrale zu nehmen.

10. System nach einem der Ansprüche 6 bis 9, wobei die zu überwachenden MGWs mindestens zwei MGWs sind; wobei
die Zuweisungseinheit (42) ferner konfiguriert ist, um jeweils ein Testendgerät in den virtuellen Gateways in den mindestens zwei MGWs entsprechend der Testanrufanfrage zuzuweisen.

## Revendications

1. Procédé pour surveiller la qualité basé sur un support de Protocole Internet IP dans un réseau mobile, **caractérisé en ce que** le procédé comprend:
l'établissement d'un centre de surveillance de support IP ; l'établissement de configurations de données logiques de passerelles virtuelles dans des Passerelles de média, MGW, d'un réseau mobile, et la connexion des passerelles virtuelles dans toutes les MGW au centre de surveillance de support IP ; le procédé comprenant en outre:
l'envoi (301), par le centre de surveillance de support IP, d'une demande d'appel de test aux passerelles virtuelles dans des MGW devant être surveillées, où la demande d'appel de test inclut des informations des MGW devant être surveillées ;
l'allocation (303), par les passerelles virtuelles, de terminaux de test selon la demande d'appel de test ; l'initiation, par le centre de surveillance de support IP, d'un flux d'appel entre les terminaux de test ; et
l'obtention (304), par les passerelles virtuelles, d'un paramètre de Qualité de Service QoS d'un support pendant le flux d'appel entre les terminaux de test ; et l'envoi, par les passerelles virtuelles, du paramètre QoS au centre de surveillance de support IP par l'intermédiaire d'un processus d'audit.

2. Procédé selon la revendication 1, dans lequel le paramètre QoS comprend au moins un des paramètres suivants : taux de perte de paquets, retard et gigue.

3. Procédé selon la revendication 1, dans lequel la connexion des passerelles virtuelles dans toutes les MGW au centre de surveillance de support IP comprend:
la connexion des passerelles virtuelles dans toutes les MGW au centre de surveillance de support IP sur la base d'un réseau IP.

4. Procédé selon la revendication 1, dans lequel l'établissement d'un centre de surveillance de support IP comprend:
l'ajout d'un nouveau Centre de commutation mobile MSC au réseau mobile comme le centre de surveillance de support IP ;
ou, la prise d'un MSC configuré dans le réseau mobile comme le centre de surveillance de support IP ;
ou, l'établissement dans le réseau mobile d'un ordinateur qui exécute des données d'exploitation d'un MSC analogique, et le fait de prendre l'ordinateur comme le centre de surveillance de support IP.

5. Procédé selon l'une quelconque des revendications 1 à 4, dans lequel les MGW devant être surveillées sont au moins deux MGW ; dans lequel
les passerelles virtuelles dans les au moins deux MGW allouent un terminal de test respectivement selon la demande d'appel de test.

6. Système pour surveiller la qualité basé sur un support de Protocole Internet, IP, dans un réseau mobile, comprenant une unité d'établissement (40), une première unité d'envoi (41), une unité d'allocation (42), une unité d'initiation (43), une unité d'obtention (44) et une seconde unité d'envoi (45), **caractérisé en ce que**
l'unité d'établissement (40) est configurée pour établir un centre de surveillance de support IP et établir des configurations de données logiques de passerelles virtuelles dans des Passerelles de média, MGW, d'un réseau mobile, où les passerelles virtuelles dans toutes les MGW sont connectées au centre de surveillance de support IP ;
la première unité d'envoi (41) est configurée pour envoyer une demande d'appel de test aux passerelles virtuelles dans des MGW devant être surveillées ;
l'unité d'allocation (42) est configurée pour allouer des terminaux de test selon la demande d'appel de test ;
l'unité d'initiation (43) est configurée pour initier un flux d'appel entre les terminaux de test ;
l'unité d'obtention (44) est configurée pour obtenir un paramètre de Qualité de Service, QoS, d'un support pendant le flux d'appel entre les terminaux de test ; et
la seconde unité d'envoi (45) est configurée pour envoyer le paramètre QoS obtenu par l'unité d'obtention au centre de surveillance de support IP par l'intermédiaire d'un processus d'audit.

7. Système selon la revendication 6, dans lequel le paramètre QoS comprend au moins un des paramètres suivants: taux de perte de paquets, retard et gigue.

8. Système selon la revendication 6, dans lequel les passerelles virtuelles dans toutes les MGW sont connectées au centre de surveillance de support IP sur la base d'un réseau IP.

9. Système selon la revendication 6, dans lequel l'unité d'établissement (40) est en outre configurée pour: ajouter un nouveau Centre de commutation mobile MSC au réseau mobile comme le centre de surveillance de support IP ;
ou, prendre un MSC configuré dans le réseau mobile comme le centre de surveillance de support IP ;
ou, établir dans le réseau mobile un ordinateur qui exécute des données d'exploitation d'un MSC analogique, et prendre l'ordinateur comme le centre de surveillance de support IP.

10. Système selon l'une quelconque des revendications 6 à 9, dans lequel les MGW devant être surveillées sont au moins deux MGW ; dans lequel
l'unité d'allocation (42) est en outre configurée pour allouer un terminal de test respectivement dans les passerelles virtuelles dans les au moins deux MGW selon la demande d'appel de test.
